Europäisches Patentamt

European Patent Office

Office européen des brevets

(19)

(11) Publication number: 0 369 935
A2

(12) # EUROPEAN PATENT APPLICATION

(21) Application number: 89730185.9

(51) Int. Cl.5: G06F 12/08

(22) Date of filing: 11.08.89

(30) Priority: 14.11.88 US 270249

(43) Date of publication of application:
23.05.90 Bulletin 90/21

(84) Designated Contracting States:
AT BE CH DE ES FR GB GR IT LI LU NL SE

(71) Applicant: COMPUADD CORPORATION
12303 Technology Blvd.
Austin Texas 78727(US)

(72) Inventor: Griffith, Jenni Lee
1457 S. Meadow Drive
Austin Texas 78758(US)
Inventor: Battershell, Ben Lewis
10508 Sans Souci Place
Austin Texas 78759(US)

(74) Representative: UEXKÜLL & STOLBERG
Patentanwälte
Beselerstrasse 4
D-2000 Hamburg 52(DE)

(54) Multiple posting cache memory.

(57) A computer has multiple posting circuits (34) for
improving the speed at which the CPU (10) writes to
various memory locations. One such posting circuit
(23) is associated with the memory controller (22)
and another posting circuit (25) is associated with
the bus controller (24). A plurality of devices (28-32)
are connected to the bus controller (24) over a
device bus (26). A cache memory (18) increases the
speed of reads from a predetermined range of mem-
ory addresses.

FIG. 1

EP 0 369 935 A2

## MULTIPLE POSTING CACHE MEMORY

### TECHNICAL FIELD OF THE INVENTION

This invention relates in general to computers, and more particularly to a computer having a cache memory.

### BACKGROUND OF THE INVENTION

During the operation of a computer, the central processing unit (hereinafter "CPU") transfers data to and from a random access memory. Because of their lower cost, dynamic RAMs are typically employed in the main memory and on other devices connected to the computer's external bus. The dynamic RAMs, however, are generally not fast enough to transfer a data word on each CPU cycle, i.e., the dynamic RAMs cannot keep pace with the CPU. Therefore, "wait states" are used to keep the CPU idle while a data word is being transferred to or from the main memory.

In some instances, a cache memory is used to effectively increase the speed of memory transfers. The cache memory usually comprises a relatively small static RAM memory at a sufficient speed such that wait states are not necessary for memory transfers between it and the CPU. When the CPU reads data from the main memory, the data is stored in the cache memory as well as being transferred to the CPU. The next time the CPU requests a read from the same memory location, the data is read from the cache memory instead of the main memory, without the need for wait states. Since the cache memory is generally much smaller than the main memory, only a portion of the memory locations in main memory may be stored in the cache memory. Therefore, a scheme must be used to determine the contents of the cache memory. In many cache memories, the oldest data is thrown out of the cache memory upon a read instruction once the cache memory becomes full.

When the CPU writes data to the main memory, the same problem of wait states is encountered. Therefore, "posting" circuitry is provided in order to temporary store a data word written to the main memory so that the CPU can begin execution of the next program steps while the data word is being written into main memory. In this regard, prior cache memory systems encounter significant difficulties, since a single posting mechanism is used for writing to both the main memory and to devices on the bus, such as modems, I/O cards and video cards. If, for instance, the CPU writes data to the main memory, that data is stored in the posting mechanism while the CPU executes the next program step. The posting mechanism then writes the stored data word to the main memory, which may take one to eight CPU cycles. During the time needed to transfer the data word from the posting mechanism to the main memory, if the CPU tries to write another word to either the main memory or one of the devices on the bus, it will have to wait until the preceding write instruction has been completed. Therefore, any advantage gained by the posting mechanism will be lost if a subsequent write is performed before the first write instruction is complete.

Therefore, a need has arisen for a cache memory system having increased posting capabilities.

### SUMMARY OF THE INVENTION

In accordance with the present invention, a computer with a cache memory is provided which substantially eliminates the disadvantages associated with prior caching systems.

The computer system of the present invention comprises a central processing unit operable to output control, data and address signals for writing to a desired memory location in either the main memory or in a memory associated with option cards connected to a bus. Bus control logic selectively transfers data from the central processing unit to the bus responsive from a first control signal from the central processing unit. Main memory control logic selectively transfers data from the central processing unit to the main memory responsive to a second control signal from the central processing unit. Posting logic is associated with said bus control logic for temporarily storing data to be written to the memory locations associated with the bus. Independent posting logic for the main memory is associated with the main memory control logic for temporarily storing data to be written to memory locations in the main memory. Hence, a post to a memory location associated with the main memory will not interfere with a subsequent write operation by the CPU to a memory location associated with the bus.

In a second aspect of the present invention, additional posting logic circuitry is provided for other devices associated with the CPU private bus, such as a numeric co-processor.

### BRIEF DESCRIPTION OF THE DRAWINGS

For a more complete understanding of the present invention, reference is now made to the following drawings taken in conjunction with the following descriptions in which:

FIGURE 1 illustrates a block diagram of the architecture of the computer system of the present invention; and

FIGURE 2 illustrates a block diagram of the posting logic associated with the memory and bus controllers of FIGURE 1.

DETAILED DESCRIPTION OF THE INVENTION

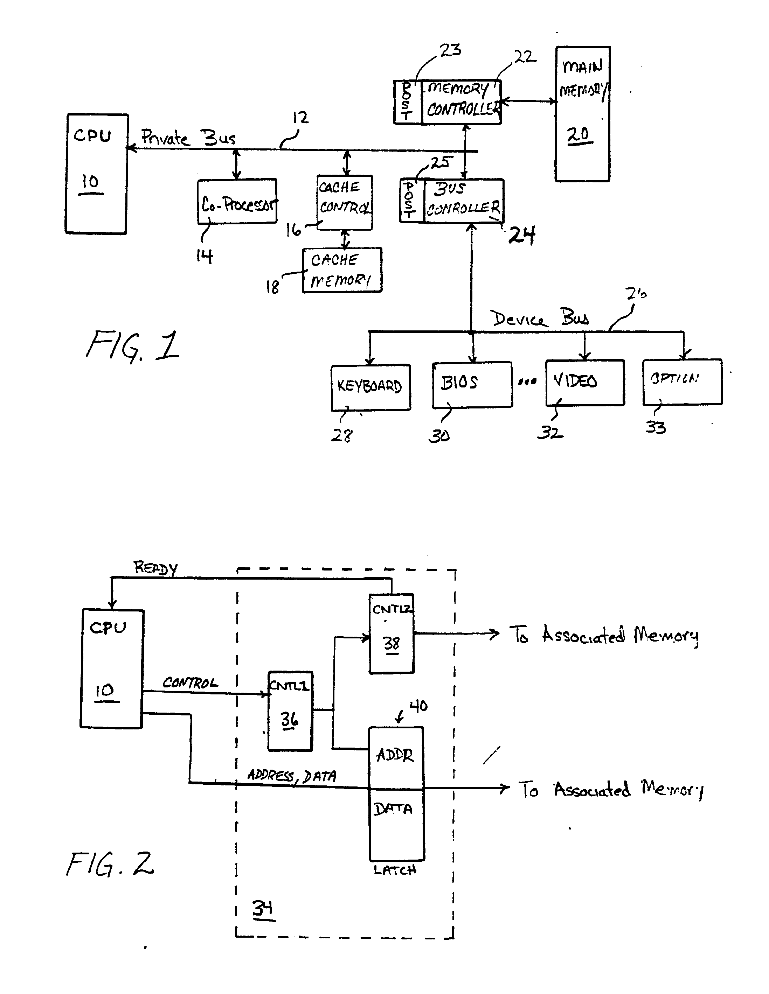

The preferred embodiment of the present invention is best understood by referring to FIGURES 1-2 of the drawings, like numeral being used for like and corresponding parts of the various drawings.

FIGURE 1 illustrates a block diagram of the computer system of the present invention. A CPU 10 is connected to a private bus 12 which carries control, address and data signals. A numeric co-processor 14 is attached to the private bus 12. A cache controller 16 and a cache memory 18 are also connected to the private bus 12.

The main memory 20 is connected to the private bus 12 through the memory controller 22 which includes memory posting circuitry 23. A bus controller 24, which includes bus posting circuitry 25, connects the private bus 12 to the device bus 26. The keyboard 28, BIOS 30 and option cards 32 are connected to the device bus 26. The option cards may include modems, input-output ports, asynchronous communication cards, hard/floppy disk controllers, video cards and additional memory cards, among others. Other circuits 33 may be hardwired to the device bus 26 on the motherboard.

In operation, the CPU 10 communicates to the main memory 20 over the private bus 12 through the memory controller 22. The CPU 10 can also access memory locations in the devices 28-32 on the private bus 12 through the bus controller 24. Typically, the addressable space of the CPU is configured such that main memory resides in one portion of the addressable space, the BIOS resides in another, and the video memory in yet another. The cache controller 16 is configured to identify a range of memory address which are to be cached. When the CPU 10 issues a request for a memory location in the cache controller's cachable space, the data read from the associated memory is stored in the cache memory 18. Hence, on a subsequent read to the same memory location, the data can be read directly from cache memory 18. Since the cache memory 18 is much faster than the main memory or the memories associated with the device bus 26, the transfer rate is vastly improved.

Typically, the cache memory is relatively small compared to the other memories. In one embodiment, a 32Kx8 cache memory is used with a main memory of 640Kx8. As new data is read from the cachable space, the cache memory will fill up. The cache controller 16 incorporates a system for removing old data from the cache to allow room for new reads. It should be noted that the cachable space may be much less than the addressable memory location. For example, the cache memory 18 may be dedicated to storing data read from the main memory 20.

When the CPU 10 writes data to the main memory 20 or the devices 28-32 on the device bus 26, the cache memory 18, if appropriate, is updated. Once again, however, a write to the main memory 20 or to the devices 28-32 requires several CPU cycles. In order to allow the CPU 10 to continue processing during the pendency of a write operation, posting circuitry is used to temporarily store the data and the address information from the CPU 10 during the pendency of the write operation so that the CPU 10 may continue execution of the program.

In prior art devices, a single posting mechanism was provided for both the main memory and the devices 28-32 on the device bus 26. Consequently, if the CPU 10 performed a write operation on the main memory 20 in a first cycle, and the write data was posted by the posting mechanism, then the CPU 10 would not be able to write to the bus devices 28-32 on a second cycle, since the posting mechanism would be tied up on the main memory write operation. The same problem would occur if the first write operation was directed to a memory associated with the device bus 26 and the second operation was directed to the main memory 20.

The present invention provides separate posting mechanisms 23 and 25 for the memory controller 22 and the bus controller 24. Further, additional posting controllers could be provided for other devices on the private bus 12 or the device bus 26, where appropriate.

FIGURE 2 illustrates a block diagram of the posting circuitry used in the memory posting circuitry 23 and the bus posting circuitry 25. The posting circuitry 34 comprises a first control circuit 36 which receives control signals from the CPU 10. The first control circuit 36 outputs control signals to a second control circuit 38 and to a latch 40. The latch 40 also receives address and data signals from the CPU 10. The second control circuit 38 outputs control signals to the memory associated with the posting circuitry 34, i.e., either the main memory 20 or the memory associated with one of the devices 28-32. The output of the latch 40 is also output to the memory associated with the particularly posting circuitry 34.

In operation, the first control circuit 36 monitors the control signals of the CPU 10 to detect a write operation involving the posting circuitry's associated memory. When an appropriate control signal is received, the first control circuit 36 outputs control signals to the latch 40 and to the second control circuit 38 indicating that a posting operation is about to occur. Pursuant to this control signal from the first control circuit 36, the latch 40 stores address and data information from the CPU private bus 12. The second control circuit 38 then outputs a ready signal to the CPU 10 indicating that the CPU 10 may continue executing the program. The second control circuitry 38 also performs the timing and control signals necessary to store the data from the latch 40 into the memory location indicated by the address stored in the latch 40. After the data is written into the desired memory location, the first control circuit 36 will allow further posting operations from the CPU 10.

The posting circuitry 34 is substantially similar for both the memory posting circuitry 23 and the bus posting circuitry 25, except that the respective first control circuitries 36 look for different signals in order to initiate a post. The first control circuitry 36 and the second control circuitry 38 may be implemented using PALs (programmable array logic) or using VLSI. The particular design of the first and second control circuits 36 and 38 will depend upon the actual control signals needed to interface with the CPU 10 and the memories.

While the posting circuitry of the present invention has been described in conjunction with a computer having a cache memory, it should be understood that the operation of the posting circuitry is independent of the cache memory and could be used without the cache.

Although the present invention has been described in detail, it should be understood that various changes, substitutions and alterations can be made herein without departing from the spirit and scope of the invention as defined by the appended claims.

## Claims

1. A computer comprising:
a central processing unit operable to output control, data and address signals for writing to a desired memory location;
a bus having a plurality of memory locations associated therewith;
bus control logic for selectively transferring data from said central processing unit to said bus responsive to a first signal from said central processing unit;

main memory control logic for selectively transferring data from said central processing unit to a main memory responsive to a second signal from said central processing unit;
bus posting logic associated with said bus control logic for receiving address and data information from said central processing unit and storing said data information in said memory locations associated therewith; and
main memory posting logic associated with said main memory control logic for receiving address and data information from said central processing unit and storing said data in said main memory.

2. The computer of Claim 1 wherein said bus posting logic comprises detector circuitry operable to detect a write instruction from said central processing unit.

3. The computer of Claim 2 wherein said bus posting logic further comprises a latch for storing said address and data information in response to a control signal from said detector circuitry.

4. The computer of Claim 3 wherein said bus posting logic further comprises circuitry to write said stored data information into the memory location associated with said stored address information.

5. The computer of Claim 1 wherein said memory control logic comprises detector circuitry operable to detect a write instruction from said central processing unit.

6. The computer of Claim 5 wherein said memory control logic further comprises a latch for storing said address and data information in response to a control signal from said detector circuitry.

7. The computer of Claim 6 wherein said memory posting logic further comprises circuitry to write said stored data information into the memory location associated with said stored address information.

8. The computer of Claim 1 and further comprising:
a CPU bus connected to said central processing unit; and
additional posting logic associated with devices connected to said CPU bus.

9. The computer of Claim 1 and further comprising a cache memory associated with said central processing unit.

10. A computer comprising:
a central processing unit operable to output control, data and address signals for writing to a desired memory location;
a bus having a plurality of memory locations associated therewith;
bus control logic for selectively transferring data from said central processing unit to said bus responsive to a first signal from said central processing unit;

main memory control logic for selectively transferring data from said central processing unit to a main memory responsive to a second signal from said central processing unit;

bus posting logic associated with said bus control logic for receiving address and data information from said central processing unit and storing said data information in said memory locations associated therewith, said bus posting logic comprising:

first detector circuitry operable to detect a first write instruction from said central processing unit;

a first latch for storing address and data information in response to a control signal from said detector circuitry;

first write circuitry to write said data stored in said first latch into the memory associated with said address data stored in said first latch; and

main memory posting logic associatd with said main memory control logic for receiving address and data information from said central processing unit and storing said data in said main memory therewith, said main memory posting logic comprising:

second detector circuitry operable to detect a second write instruction from said central processing unit;

a second latch for storing address and data information in response to a control signal from said second detector circuitry; and

second write circuitry to write said data stored in said second latch into the memory associated with said address stored in said second latch.

11. A method of posting data to a computer having a central processing unit independently connected to a plurality of memories comprising the steps of:

storing a first data word written from the central processing unit to a first memory in a first posting circuit associated with said first memory;

transmitting a signal to the central processing unit indicating said first data word has been stored;

resuming central processing unit operations responsive to said signal;

storing a second data word written from the central processing unit to a second memory in a second posting circuit associated with said second memory.

12. The method of Claim 11 and further comprising the step of transferring said first data word from said first posting circuit to said first memory.

13. The method of Claim 11 and further comprising the step of detecting a write operation from said central processing unit to a first memory.

14. The method of Claim 11 and further comprising the step of storing a second data word written from the central processing unit to a third memory in a third posting circuit associated with a third memory.

FIG. 1

FIG. 2